# EUROPÄISCHE PATENTSCHRIFT

(11) **EP 0 952 102 B1**
(45) Veröffentlichungstag und Bekanntmachung des Hinweises auf die Patenterteilung: **31.03.2004**
(21) Anmeldenummer: 99250123.9
(22) Anmeldetag: 15.04.1999
(51) Int. Cl.: B65G 47/53

(54) **Vorrichtung zur Übergabe von Stückgut, insbesondere von Werkstückträgern, Werkstücken, Behältern oder Paletten**
Transfer-device for articles, in particular workpiece carriers, workpieces, containers or pallets
Dispositif de transfert d'articles, en particulier porte-charges pour pièces à travailler, pièces à travailler, conteneurs ou palettes

(30) Priorität: 20.04.1998 DE 19818604
(43) Veröffentlichungstag der Anmeldung: 27.10.1999
(73) Patentinhaber: Siemens Aktiengesellschaft, 80333 München (DE)
(72) Erfinder: Schmidt, Heinz, 70567 Stuttgart (DE)

(56) Entgegenhaltungen:
- DE-A- 2 805 572
- DE-A- 3 109 219
- DE-C- 4 439 106
- US-A- 4 747 477

## Beschreibung

Die Erfindung betrifft eine Vorrichtung zur Übergabe von Stückgut, insbesondere von Werkstückträgern, Werkstücken, Behältern oder Paletten, gemäß dem Oberbegriff des Anspruchs 1.

Aus der deutschen Patentschrift DE 30 12 355 C2 ist bereits eine Vorrichtung zum Umsetzen von Werkstücken bzw. Werkstückträgern von einer ersten Förderbahn auf eine dazu rechtwinklig angeordnete zweite Förderbahn bekannt. Die Förderbahnen sind jeweils aus zwei mit Abstand zueinander und parallel nebeneinander angeordneten Förderern aufgebaut. Die Umsetzvorrichtung besteht mindestens aus einem über Umlenkrollen geführten endlosem Umsetzband, das zwischen den beiden Förderern der ersten Förderbahn eine weitere Förderbahn bildet. Das Umsetzband wird über einen Antriebsmotor angetrieben, der mit der weiteren Förderbahn zu einer Baueinheit zusammengefaßt ist. Diese Baueinheit ist über einen Verbindungsrahmen an den Tragrahmen der ersten Förderstrecke aufgehängt. Für den Umsetzvorgang sind die auf der ersten Förderbahn geförderten Werkstückträger durch die weitere Förderbahn der Umsetzvorrichtung anhebbar und werden von der weiteren Förderbahn seitlich zur zweiten Förderbahn gefördert. Anschließend wird die Umsetzvorrichtung wieder abgesenkt. Die Hub-/Senkbewegung der Umsetzvorrichtung erfolgt im wesentlichen durch eine Kolben-/Zylindereinheit. Um die Kolbenstange der Kolben-/Zylindereinheit von Querkräften zu entlasten, ist eine zusätzliche Führung der weiteren Förderbahn mit dem Umsetzband gegenüber dem feststehenden Verbindungsrahmen der Umsetzvorrichtung über zwei voneinander beabstandete Führungsstangen vorgesehen.

Die Verwendung der zusätzlichen Führungsstangen neben der Kolben-/Zylindereinheit führt zu einem konstruktiv aufwendigen Aufbau der Hubvorrichtung.

Der vorliegenden Erfindung liegt die Aufgabe zugrunde, ein Vorrichtung zur Übergabe von Stückgut, insbesondere von Werkstückträgern, Werkstücken, Behälter oder Paletten, zu schaffen, die eine kompakte und konstruktive einfache Bauweise, insbesondere geringe Bauhöhe aufweist, sowie gleichzeitig eine sichere Übergabe des Stückgutes gewährleistet.

Diese Aufgabe wird bei einer Vorrichtung zur Übergabe von Stückgut, insbesondere von Werkstückträgem, Behältern oder Paletten durch die im Anspruch 1 aufgeführten Merkmale gelöst. Vorteilhafte Ausgestaltungen der Erfindung sind in den Unteransprüchen 2 bis 7 angegeben.

Erfindungsgemäß wird durch den Antrieb des Förderelements der Übergabevorrichtung in Hub- und Senkrichtung über vier jeweils in den Ecken eines gedachten Vierecks angeordneten Linearantrieben erreicht, daß durch Aufteilung der Hebekräfte auf vier Linearantriebe diese entsprechend kleiner dimensioniert werden können. Auch können die Förderelemente der Übergabevorrichtung besonders leicht bauend ausgestaltet werden, da diese durch die vier Linearantriebe stabil abgestützt werden. Hierdurch brauchen die Förderelemente nicht so verwindungssteif ausgebildet werden wie bei zentralen Antrieb durch eine einzige Lineareinheit. Um ein Einleiten von Querkräften in die Antriebsstangen der Linearantriebe zu vermeiden, sind diese über jeweils zwischen dem Förderelement und dem Linearantrieb angeordnete Kopplungsmittel derart voneinander getrennt, daß Sie außerhalb der Übergabestellung, in der das Förderelement über die Förderebene der ersten Förderbahn angehoben ist, mit einem seitlichen Spiel zu einem hülsenförmigen Führungselement heb- und senkbar sind. Hierdurch ist gleichzeitig gewährleistet, daß beim Heben oder Senken ein Verklemmen des Förderelementes in Folge einer nicht exakt synchronen Betätigung der Linearantriebe vermieden wird. Darüber hinaus sind in vorteilhafter Weise die Kopplungsmittel derart ausgebildet, daß diese in der Übergabestellung das Förderelement ortsfest, d.h. in vertikaler und horizontaler Richtung, halten, so daß der eigentliche Übergabevorgang des Stückgutes von der ersten auf die zweiten Förderbahn sicher erfolgen kann.

In einer weiteren Ausgestaltung ist vorgesehen, daß zur Begrenzung der Winkelbeweglichkeit der Kopplungsmittel außerhalb der Übergabestellung diese ein Schubelement aufweisen, das mit Spiel zu einem feststehenden Führungselement geführt ist. Dieses Schubelement ist über ein im wesentlichen nur Kräfte in Vertikalrichtung übertragendes Kugelgelenk mit der Antriebsstange des Linearantriebs verbunden. Zusätzlich weist dieses Schubelement eine Konusfläche auf, die in der Übergabestellung des Förderelementes an einer komplementär ausgebildeten Gegendruckfläche des Führungselementes anliegt und somit sicher das Förderelement in der Übergabestellung in Horizontal- sowie Vertikalrichtung festlegt. Das Schubelement ist vorzugsweise zylinderförmig ausgebildet und ist mit seiner Längsrichtung in Hub-/Senkrichtung ausgerichtet. An das Kugelgelenk angrenzend ist die Konusfläche ringförmig an dem Schubelement angeordnet, die von dem Schubelement und von oben ausgehend gesehen abfallend ausgerichtet ist.

In einer bevorzugten Ausführungsform ist das Förderelement aus zwei parallel und mit Abstand zu einander verlaufenden Förderelementen ausgebildet. Diese Ausbildung entspricht vorteilhafter Weise der Ausbildung der ersten und zweiten Förderbahn. Somit ist eine sichere Übergabe des Stuckgutes gewährleistet. Die Förderelemente sind aus einem endlos umlaufenden Gurt gebildet, der an den Enden des Förderelementes über Umlenkrollen gefuhrt ist. Es ist auch denkbar, hier Rollenketten vorzusehen. Die Linearantriebe sind als pneumatische Kolben-/Zylindereinheiten ausgebildet, die vorzugsweise eine kurze Bauhöhe aufweisen

Die Förderelemente sind über die Schubelemente, die in den Führungselementen geführt sind, und die Linearantriebe an einem Verbindungsrahmen gelagert. Diese Teile bilden eine Baugruppe, die in den Verlauf der ersten Förderbahn an beliebiger Stelle mit dem Tragrahmen der ersten Förderbahn verbunden werden können.

Die Erfindung wird nachfolgend anhand von zwei in Zeichnungen dargestellten Ausführungsbeispielen näher beschrieben. Es zeigen:
- Figur 1: eine Draufsicht auf ein Fördersystem mit einer ersten und einer hiervon abzweigenden zweiten Förderbahn,
- Figur 2: eine Ausschnittsvergrößerung von Figur 1 aus dem Bereich der Vorrichtung zur Übergabe von Stückgut,
- Figur 3: eine Seitenansicht von Figur 2,
- Figur 4: eine Ausschnittvergrößerung von Figur 3 aus dem Bereich eines Linearantriebs in der abgesenkten Ruhestellung und
- Figur 5: eine Ausschnittvergrößerung von Figur 3 aus dem Bereich eines Linearantriebes in der angehobenen Übergabestellung.

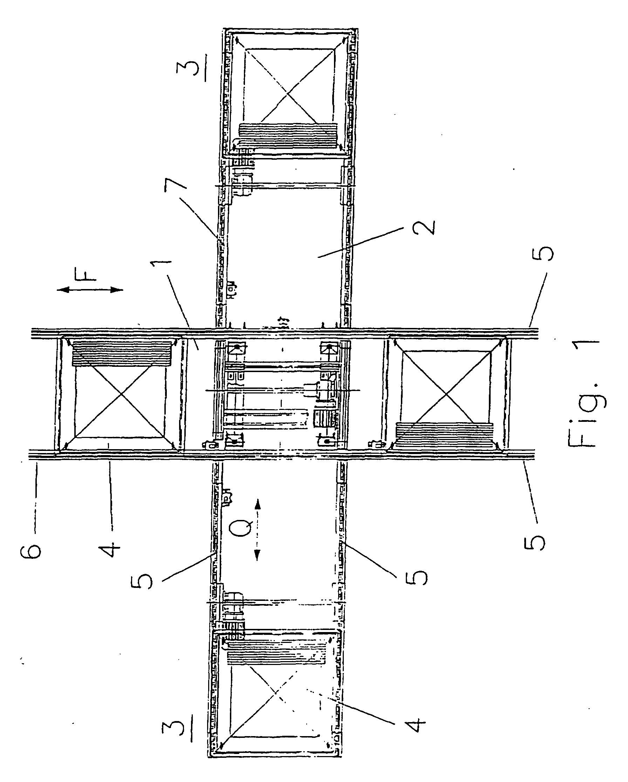

Die Figur 1 zeigt eine Draufsicht auf ein Fördersystem, das im wesentlichen aus einer ersten Förderbahn 1 besteht, die eine Hauptförderstrecke bildet, sowie eine diese erste Förderbahn 1 kreuzende zweite Forderbahn 2. An den jeweiligen Enden der zweiten Förderbahn 2 sind Montagearbeitsplätze 3 vorgesehen, an denen Bedienpersonen an darauf gelagerten Bauteilen Montagevorgänge vornehmen, wobei die Bauteile auf Werkstückträgern herangefordert werden. Im vorliegenden Fall sind die Werkstückträger das zu fördernde Stuckgut 4. Die erste Förderbahn 1 und die zweite Förderbahn 2 sind im wesentlichen aus zwei parallel und mit Abstand zu einander angeordneten Förderern 5 aufgebaut, die entweder als Gurtförderer mit einem endlos umlaufenden angetriebenen Fördergurt 6 oder als Kettenförderer mit einer endlos umlaufenden Rollenkette 7 ausgebildet sind. Es ist auch möglich nur eine der beiden Förderer 5 je Förderbahn 1,2 mit einem angetriebenen Gurt- oder Kettenförderer auszubilden und an dem anderen Förderer 5 ortsfest gelagerte, frei drehbare Förderrollen vorzusehen.

Im Kreuzungsbereich der ersten Förderbahn 1 und der zweiten Förderbahn 2 ist eine Vorrichtung 8 zur Übergabe des Stückgutes 4 von der ersten Förderbahn 1 auf die zweite Förderbahn 2 angeordnet. Diese Übergabevorrichtung 8 wird auch als Hub-Quertransfereinheit bezeichnet.

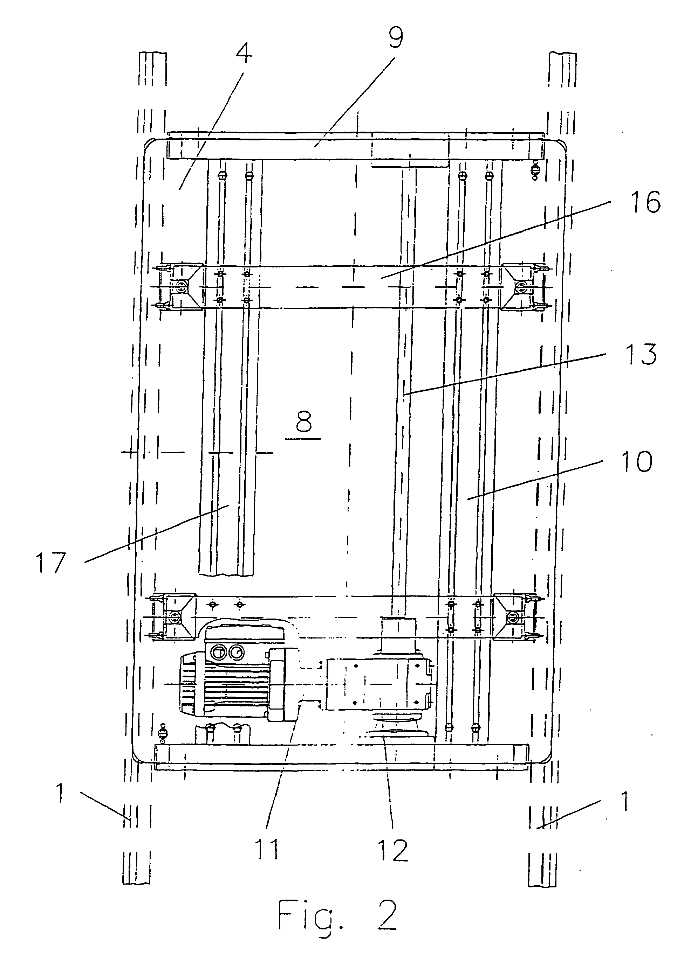

Anhand der Figur 2, die eine Ausschnittsvergrößerung von Figur 1 aus dem Bereich der Übergabevorrichtung 8 zeigt, wird deren Aufbau und Funktionsweise näher erläutert. Die Übergabevorrichtung 8 besteht im wesentlichen aus zwei parallel zueinander ausgerichteten und voneinander beabstandeten Förderelementen 9, deren Abstand den Förderern 5 der ersten Förderbahn 1 und der zweiten Förderbahn 2 entspricht. Durch diese Förderelemente 9 werden auch wie durch die Förderer 5 die als Werkstückträger ausgebildeten Stückgüter 4 nur entlang ihrer Längsseiten getragen. Die Förderelemente 9 sind zwischen den beiden Förderern 5 der ersten Förderbahn 1 sowie rechtwinkelig hierzu ausgerichtet. Die Förderelemente 9 sind auf einem Tragrahmen 10 abgestützt, der zwei parallel zur Längsrichtung der ersten Förderbahn 1 verlaufene Längstraversen 17 aufweist, die über zwei Querträger 16 miteinander verbunden sind. Desweiteren werden die Förderelemente 9 über einen Motor 11 mit einem Getriebe 12 und über eine hieran anschließende Übertragungswelle 13 angetrieben.

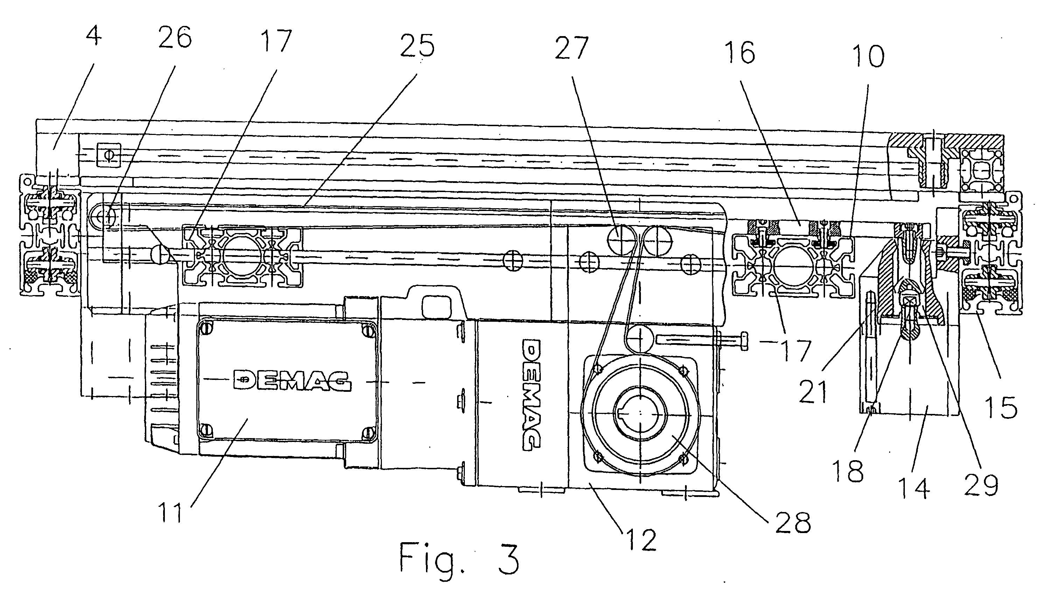

Der Figur 3, die eine Seitenansicht von Figur 2 zeigt, ist zu entnehmen, daß die Förderelemente 9 jeweils von als pneumatisch betriebene Kolben-/Zylindereinheiten ausgebildete Linearantrieben 14 aus einer Ruhestellung, in der die Förderfläche der Förderelemente 9 unterhalb der Förderebene der ersten Förderbahn 1 liegt, in eine Übergabestellung, in der die Förderelemente 9 oberhalb der Förderebene der ersten Förderbahn 1 liegt angehoben werden können. Hierzu sind für die beiden Förderelemente 9 vier Linearantriebe 14 vorgesehen, die im Bereich der jeweiligen Enden der Förderelemente 9 in den Ecken eines gedachten Vierecks angeordnet und an den Innenseiten der Längsträger 15 der Förderer 5 der ersten Förderbahn 1 aufgehängt sind. Die beiden gegenüberliegenden Linearantriebe 14 sind jeweils über einen Querträger 16 miteinander verbunden, auf denen jeweils zwei parallel zu den Längsträgern 15 der ersten Förderbahn 1 verlaufende Längstraversen 17 angeordnet sind, an deren jeweils gegenüberliegenden Enden die Förderelemente 9 gelagert sind.

An der Innenseite des einen Förderelementes 9 ist die Übertragungswelle 13 gelagert und an der gegenüberliegenden Innenseite des anderen Förderelementes 9 das Getriebe 12 angeflanscht. Somit sind der Motor 11, das Getriebe 12 und die Übertragungswelle 13 mit den Förderelementen 9 gemeinsam heb- und senkbar. Aus den Figuren 2 und 3 ist somit entnehmbar, daß die Förderelemente 9 über die beiden Längstraversen 17 und die beiden Quertraversen 16 auf vier Linearantrieben 14, die in den Eckpunkten eines gedachten Viereckes angeordnet sind, gelagert sind.

Desweiteren ist der Figur 3 zu entnehmen, daß die Förderelemente 9 im wesentlichen aus einem endlos umlaufenden Gurt 25 bestehen, der über an den jeweiligen Enden der Förderelemente 9 angeordnete Umlenkrollen 26 und weitere Führungsrollen 27 sowie eine Antriebsscheibe 28 geführt ist. Die Antriebsscheiben 28 sind an dem Getriebe 12 oder der Übertragungswelle 13 gelagert. In der angehobenen Übergabestellung wird das Stückgut 4 von der ersten Förderbahn 1 abgehoben und kann von den Förderelementen 9 in Richtung der zweiten Förderbahn 2 über den Förderer 5 der ersten Förderbahn 1 hinweg gefördert werden.

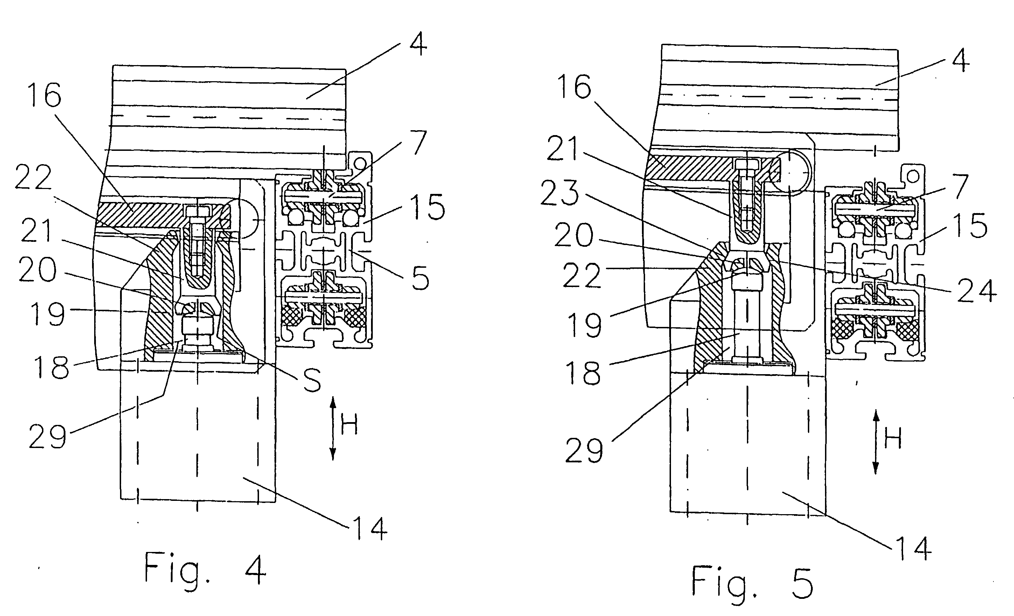

Die Art der Lagerung der aus den Förderelementen 9, den Querträgern 16 und den Längsträgern 17 gebildeten Baueinheit auf den Linearantrieben 14 ist den Figuren 4 und 5 zu entnehmen, die Ausschnittsvergrößerungen von Figur 3 aus dem Bereich der Linearantriebe 14 zeigen. Hierbei zeigt die Figur 4 die vorgenannte Baueinheit in der abgesenkten Ruhestellung und die Figur 5 in der angehobenen Übergabestellung. Die Linearantriebe 14 weisen jeweils eine Antriebsstange 18 auf, die in Hub- und Senkrichtung H antreibbar ist. An ihrem freien Ende weist die Antriebsstange 18 einen Kugelkopf 19 auf, auf den eine Kugelaufnahme 20 eines stabförmigen Schubelementes 21 ruht. Der Kugelkopf 19 und die Kugelaufnahme 20 bilden somit ein Kugelgelenk. Die Kugelaufnahme 20 des Schubelementes 21 wird im wesentlichen durch die stabile Auflage der aus den Förderelementen 9, der Querträger 16 und der Längsträgern 17 gebildeten Baueinheit auf den vier Antriebsstangen 18 im normalen Betrieb zentriert auf dem Kugelkopf 19 gehalten. Um ein Herunterrutschen der Kugelaufnahme 20 durch Krafteinwirkung von außen von dem Kugelkopf 19 außerhalb der Übergabestellung der Förderelementen 9 zu vermeiden, ist die Kugelaufnahme 20 unter Beibehaltung eines Spiels S von einem hülsenförmigen Führungselement 22 umgeben. Bei einem Verrutschen der Kugelaufnahme 20 von dem Kugelkopf 19 käme somit der Außenradius der Kugelaufnahme 20 in Kontakt mit der inneren Wandung des Führungselementes 22.

Um in der angehobenen Übergabestellung gemäß Figur 5 eine in Vertikal- und Horizontalrichtung gegen Verrutschen gesicherten Halt der Baueinheit mit den Förderelementen 9 in der Übergabestellung zu gewährleisten, ist zusätzlich auf der Außenseite der Kugelaufnahme 20 eine Konusfläche 23 vorgesehen, die in der Übergabestellung an einer komplementär ausgebildeten Gegendruckfläche 24 am oberen Ende des Führungselementes 22 anliegt. Hierdurch wird das Schubelement 21, das an dem der Kugelaufnahme abgewandten Ende den Querträger 16 trägt, in der Übergabestellung formschlüssig gehalten. Somit wird die zuvorbeschriebene Baueinheit verwindungssteif gehalten. Das Führungselement 22 ist hierbei mit dem Linearantrieb 14 verbunden und gemeinsam an dem Längsträger 15 der ersten Förderbahn 1 aufgehängt.

## Patentansprüche

1. Vorrichtung zur Übergabe von Stückgut (4), insbesondere von Werkstückträgern, Werkstücken, Behältern oder Paletten, von einer ersten Förderbahn (1) auf eine angrenzende zweite Förderbahn (2), wobei die Förderbahnen aus mindestens zwei parallel und mit Abstand zueinander verlaufenden sowie das Stückgut tragenden Förderern (5) bestehen, mit mindestens einem mittels einer Hubvorrichtung (H) mit mindestens einem Linearantrieb (14) zwischen einer unter der Förderebene der ersten Förderbahn gelegenen Ruhestellung und einer über dieser Förderebene gelegenen Übergabestellung heb- und senkbaren und zwischen den Förderern der ersten Förderbahn angeordneten Förderelement (9) für die Übergabe des Stückguts auf die zweite Förderbahn,
**dadurch gekennzeichnet,**
**daß** das Förderelement (9) an den an den Förderern (5) angrenzenden Endbereichen jeweils von zwei in den Ecken eines gedachten Vierecks angeordneten Linearantrieben (14) heb- und senkbar ist, die jeweils über ein Kopplungsmittel (29) derart mit dem Förderelement (9) verbunden sind, daß in der Übergabestellung das Förderelement (9) ortsfest gehalten ist und außerhalb der Übergabestellung die Linearantriebe (14) winkelbeweglich mit dem Förderelement (9) verbunden sind.

2. Vorrichtung nach Anspruch 1,
**dadurch gekennzeichnet,**
**daß** die Kopplungsmittel (29) zur Begrenzung der Winkelbeweglichkeit jeweils ein außerhalb der Übergabestellung mit Spiel (S) zu einem Führungselement (9) geführtes Schubelement (21) aufweisen, das über ein Kugelgelenk (19) mit der Antriebsstange (18) des Linearantriebs (14) verbunden ist und eine Konusffäche (23) aufweist, die in der Übergabestellung an einer komplementär ausgebildeten Gegendruckfläche (24) des Führungselementes (9) anliegt.

3. Vorrichtung nach Anspruch 2,
**dadurch gekennzeichnet,**
**daß** das Schubelement (21) zylinderförmig ausgebildet, mit seiner Längsrichtung in Hub-/Senkrichtung (H) ausgerichtet ist und an dem dem Kugelgelenk (19) abgewandten Ende die Konusfläche (23) ringförmig an dem Schubelement (21) angeordnet ist, die ausgehend von dem Schubelement (21) abfallend ist.

4. Vorrichtung nach einem der Ansprüche 1 bis 3,
**dadurch gekennzeichnet,**
**daß** zwei parallel und mit Abstand zueinander verlaufende Förderelemente (9) vorgesehen sind, die jeweils über zwei Linearantriebe (14) heb- und senkbar sind.

5. Vorrichtung nach einem der Ansprüche 1 bis 4,
**dadurch gekennzeichnet,**
**daß** jedes Förderelement (9) im wesentlichen aus einem endlos umlaufenden Gurt (25) gebildet ist, der an den Enden des Förderelementes (9) über Umlenkrollen (26) geführt ist.

6. Vorrichtung nach einem der Ansprüche 1 bis 5,
**dadurch gekennzeichnet,**
**daß** die Linearantriebe (14) als pneumatische Kolben-/Zylindereinheiten ausgebildet sind.

7. Vorrichtung nach einem der Ansprüche 1 bis 6,
**dadurch gekennzeichnet,**
**daß** die Förderelemente (9) über die Schubelemente (21), die Linearantriebe (14) und die Führungselemente (22) an einem Längsträger (15) der ersten Förderbahn (1) gelagert sind.

## Claims

1. Apparatus for transferring articles (4), in particular workpiece carriers, workpieces, containers or pallets, from a first conveying path (1) to an adjacent, second conveying path (2), the conveying paths comprising at least two parallel conveyors (5) which are spaced apart from one another and bear the articles, having at least one conveying element (9) which can be raised and lowered, by means of a lifting apparatus (H) with at least one linear drive (14), between a rest position, in which it is located beneath the conveying plane of the first conveying path, and a transfer position, in which it is located above said conveying plane, and is arranged between the conveyors of the first conveying path and is intended for transferring the articles to the second conveying path, **characterized in that** the conveying element (9) can be raised and lowered .at the end regions adjacent to the conveyors (5) in each case by two linear drives (14), which are arranged in the corners of an imaginary quadrilateral and are connected to the conveying element (9) in each case, via a coupling means (29), such that, in the transfer position, the conveying element (9) is retained in a stationary manner and, outside the transfer position, the linear drives (14) are connected for angular movement to the conveying element (9).

2. Apparatus according to Claim 1, **characterized in that**, for limiting the angular movement capability, the coupling means (29) each have a pushing element (21) which is guided with play (S) in relation to a guide element (9) outside the transfer position, is connected to the drive rod (18) of the linear drive (14) via a ball-and-socket joint (19) and has a conical surface (23) which, in the transfer position, butts against a complementary counterpressure surface (24) of the guide element (9).

3. Apparatus according to Claim 2, **characterized in that** the pushing element (21) is of cylindrical design and has its longitudinal direction oriented in the raising/lowering direction (H) and, at the end which is directed away from the ball-and-socket joint (19), the conical surface (23) is arranged annularly on the pushing element (21), this surface sloping downwards from the pushing element (21).

4. Apparatus according to one of Claims 1 to 3, **characterized in that** two parallel and spaced-apart conveying elements (9) are provided, it being possible for these to be raised and lowered in each case via two linear drives (14).

5. Apparatus according to one of Claims 1 to 4, **characterized in that** each conveying element (9) is formed essentially from an endlessly circulating belt (25) which is guided over deflecting rollers (26) at the ends of the conveying element (9).

6. Apparatus according to one of Claims 1 to 5, **characterized in that** the linear drives (14) are designed as pneumatic piston/cylinder units.

7. Apparatus according to one of Claims 1 to 6, **characterized in that** the conveying elements (9) are mounted on a longitudinal support (15) of the first conveying path (1) via the pushing elements (21), the linear drives (14) and the guide elements (22).

## Revendications

1. Dispositif de transfert de colis de détail (6), en particulier de supports de pièces usinées, de pièces usinées, de conteneurs ou de palettes, d'une première bande transporteuse (1) sur une deuxième bande transporteuse voisine (2), les bandes transporteuses étant constituées d'au moins deux transporteurs (5) s'étendant en parallèle à distance l'un de l'autre et supportant les colis de détail, le dispositif de transfert comportant au moins un élément de transport (9) qui est destiné au transfert des colis de détail sur la deuxième bande transporteuse, l'élément de transport étant placé entre les transporteurs de la première bande transporteuse et pouvant être soulevé et abaissé au moyen d'un dispositif de levage (4), comportant au moins un entraînement linéaire (14), entre une position de repos située sous le plan de transport de la première bande transporteuse et une position de transfert située au-dessus de ce plan de transport,
**caractérisé**
**en ce que** l'élément de transport (9) peut être soulevé et abaissé dans les régions d'extrémité voisines des transporteurs (5) respectivement par deux entraînements linéaires (14) qui sont placés aux sommets d'un quadrilatère imaginaire et qui sont reliés par des moyens de couplage (29) à l'élément de transport (9) de sorte que l'élément de transport est maintenu localement fixe dans la position de transfert et qu'en dehors de la position de transfert les entraînements linéaires (14) sont reliés à l'élément de transport (9) de façon à être mobiles angulairement.

2. Dispositif selon la revendication 1, **caractérisé en ce que** les moyens de couplage (29) destinés à limiter la mobilité angulaire comporte chacun un élément de poussée (21) qui est guidé en dehors de la position de transfert avec un certain jeu (S) par rapport à un élément de guidage (9), qui est relié par une rotule (19) à la barre d'entraînement (18) de l'entraînement linéaire (14) et qui présente une surface conique (23) qui porte dans la position de transfert contre une surface de pression (24) antagoniste, constituée de façon complémentaire, de l'élément de guidage (9).

3. Dispositif selon la revendication 2, **caractérisé en ce que** l'élément de poussée (21) a une forme cylindrique, en ayant sa direction longitudinale orientée dans la direction de levage/d'abaissement (H), et **en ce que** la surface conique (23), qui est descendante en partant de l'élément de poussée (21), est placé annulairement sur l'élément de poussée (21) à l'extrémité opposée à la rotule (19).

4. Dispositif selon l'une des revendications 1 à 3, **caractérisé en ce qu'**il est prévu deux éléments de transport (9), s'étendant en parallèle à distance l'un de l'autre, qui peuvent être soulevés et abaissés chacun au moyen deux entraînements linéaires (14).

5. Dispositif selon l'une des revendications 1 à 4, **caractérisé en ce que** chaque élément de transport (9) est formé essentiellement d'une courroie (25) circulant sans fin qui est guidée à l'extrémité de l'élément transporteur (9) par des rouleaux de renvoi (26).

6. Dispositif selon l'une des revendications 1 à 5, **caractérisé en ce que** les entraînements linéaires (14) sont conformés en unités pneumatiques à cylindre et piston.

7. Dispositif selon l'une des revendications 1 à 6, **caractérisé en ce que** les éléments de transport (9) sont montés sur un longeron (15) de la première bande transporteuse (1) par les éléments de poussée (21), les entraînements linéaires (14) et les éléments de guidage (22).
